# EUROPEAN PATENT APPLICATION

(11) **EP 2 107 780 A1**
(43) Date of publication of application: **07.10.2009**
(21) Application number: 09157252.9
(22) Date of filing: 03.04.2009
(51) Int. Cl.: H04M 17/00, H04W 4/24, G06Q 30/00, G06Q 20/00

(54) **Method and server for facilitating transfer of services between users**

(30) Priority: 03.04.2008 ES 200800933
(71) Applicant: Vodafone Group PLC, Newbury Berkshire RG14 2FN (GB)
(72) Inventor: Touset Rios, Miguel Angel, 28108 Alcobendas (Madrid) (ES); Cajigas Bringas, Guillermo, 28108 Alcobendas (Madrid) (ES); Sendra Alcina, José Carlos, 28108 Alcobendas (Madrid) (ES)
(74) Representative: Carpintero Lopez, Francisco

(57) **Abstract**

A method for facilitating transfer of services between two users, the method comprising the steps of: informing a server (13, 23) by a first user (12, 22) of a network operator, said first user (12, 22) having a user account (14, 24) and being subscribed to at least one service provided by said network operator, about an identity code of a second user (15, 25) and about a transferable service to which said first user (12, 22) is subscribed; assigning by said server (13, 23) to said second user (15, 25) an identifier for accessing to said service, in such a way that said second user (15, 25) is allowed to access said service to which said first user (12, 22) is subscribed. System comprising means for carrying out the method steps.

## Description

### FIELD OF THE INVENTION

The present invention relates to communication systems and, especially, to secure electronic transactions of data between users. More particularly, the invention described herein relates to the secure transfer of electronically exchangeable and payable resources.

### STATE OF THE ART

Nowadays, it is not possible for a subscriber who is subscribed to a network operator to use the services offered by a different network operator, to which he/she is not subscribed. This is mainly due to the difficulty that a network operator has in charging subscribers of a different network operator.

Pre-paid cards, such as the ones used in telephone boxes, have been an attempt to solve this problem. Some network operators offer pre-paid cards for accessing, without subscribing, to services of other operators. This is however limited to pre-paying for a specific amount of money or time.

### SUMMARY OF THE INVENTION

It is a primary aim of the present invention to provide a method for facilitating transfer of services between two users of at least one network. In various preferred embodiments, the method may be implemented in wide area cellular telephone networks supporting 2G, 3G or beyond 3G wireless communications technologies.

In a first embodiment, a method for facilitating transfer of a service between two users is provided. The method comprises the steps of: receiving from a first user of a network operator, said first user having a user account and being subscribed to at least one service provided by said network operator, an identity code of a second user and data identifying a transferable service to which said first user is subscribed (by this step, the first user informs a server about said identity code and transferable service); assigning (by said server) to said second user an identifier for accessing to said service, in such a way that said second user is allowed to access said service to which said first user is subscribed.

Preferably, the method further comprises the steps of:
creating an account for said second user; and storing in said account the following information: said identity code of the second user and an identity code of said service.

Preferably, the step of receiving (in said server) an identity code of the second user and data identifying the transferable service further comprises the step of receiving a value associated to said service, said value representing quantifiable units of said service (units quantifying amount of time, money or credit, number of users, etc.), informing the server about the quantifiable units of service that said second user is allowed to access. In this case, the method further comprises the steps of: creating an account for said second user; and storing in said account the following information: said identity code of the second user, said data identifying the service and said value associated to said service.

In a possible embodiment, said account is a sub-account of said user account.

In a possible embodiment, said account is located within said user account.

Optionally, the method further comprises the step of: sending said second user by said server said identifier for accessing to said service.

In a possible embodiment, said service is provided by a mobile network operator to which said first user is subscribed. Said first user is then a mobile user. Said second user can also be a mobile user, in which case said identity code of said mobile second user is the MSISDN of said second mobile user.

In a possible embodiment, said second user is subscribed to a different network operator from the network operator to which said first user is subscribed.

In a possible embodiment, said server is located in the network of the network operator to which said first user is subscribed. In an alternative embodiment, said server is provided by a third party, different from the network operator to which said first user is subscribed.

Said step of communicating between said first user and said server can be done through an Internet access or through a mobile telephone connection.

Additionally, the method comprises the step of assigning by said server to said second user an address to which said second user can be logged in for accessing said service. Said address is an IP address or an MSISDN.

The present invention also provides a method of accessing by a user a service to which said user is not subscribed or to which said user does not have direct access at a certain moment. It comprises the step of: transferring said service to said user from another user which is subscribed to said service according to the method already explained.

It is another object of the present invention to provide a server for facilitating transfer of services between users of at least one network, to which network at least a first user is subscribed, and a user account being associated with said first user (12, 22), comprising:
- means for receiving, from said first user, an identity code of a second user and data identifying a transferable service to which said first user is subscribed; and
- means for assigning, to said second user, an identifier for accessing said service, whereby said second user is allowed to access said service.

The server further comprises means for sending said identifier for accessing said service to the second user. Additionally, said server comprises means for transferring said service to said second user from said first user.

The server can be either located in the network of the network operator to which said first user is subscribed or can be provided by a third party, different from the network operator to which said first user is subscribed.

The communication between the server and said first user can be performed either through an Internet access or by using a mobile telephone connection.

Also, it is another object of the present invention to provide a system comprising: a network of a network operator; a first user subscribed to said network operator; a server; a user account associated to said first user (12, 22). The system is **characterised in that** it further comprises: means for informing said server by said first user about an identity code of a second user and about a transferable service to which said first user is subscribed; means for assigning by said server to said second user an identifier for accessing said service, in such a way that said second user is allowed to access said service to which said first user is subscribed.

The system further comprises means for sending said second user by said server said identifier for accessing said service.

The system further comprises means for transferring said service to said second user from said first user which is subscribed to said service.

The advantages of the proposed invention will become apparent in the description that follows.

### BRIEF DESCRIPTION OF THE DRAWINGS

To complete the description and in order to provide for a better understanding of the invention, a set of drawings is provided. Said drawings form an integral part of the description and illustrate a preferred embodiment of the invention, which should not be interpreted as restricting the scope of the invention, but just as an example of how the invention can be embodied. The drawings comprise the following figures:
Figure 1 shows a schematic representation of a system for transferring a service from a first terminal to a second one, in accordance with a possible embodiment of the invention.
Figure 2 shows a schematic representation of a system for transferring a service from a first terminal to a second one, in accordance with an alternative embodiment of the invention.

### DESCRIPTION OF PREFERRED EMBODIMENTS OF THE INVENTION

In the context of the present invention, the following terms are defined as follows:
Mobile terminal: It is a terminal which can be connected to a wireless or cellular network.
Mobile user: It is a user who can access a wireless or cellular network through a mobile terminal connected to that network.
User account: It is a register of the services to which a user is subscribed and of the values associated to those services, such as resources, rights, capabilities, amount of money, time or units that permit that user to access those services.
Sub-account: It is an account created from a user account, which is limited to a sub-group of contents of that user account. In the context of the present invention, a sub-account contains a sub-group of resources, rights, capabilities, amounts of money, time or units owned by the user of the user account which comprises the sub-account and shared by that user with other users.

The implementation of the present invention can be carried out as follows:

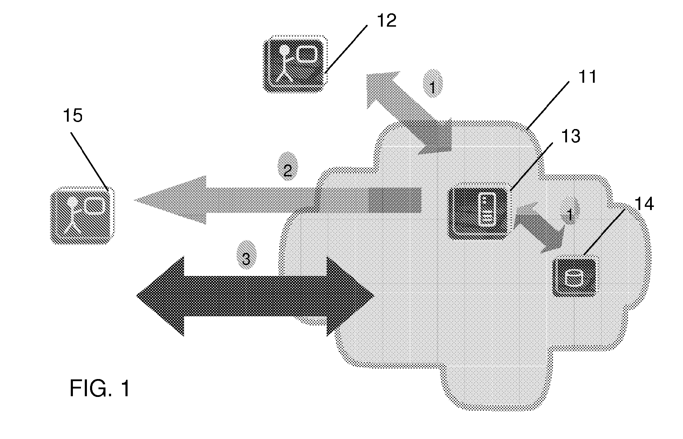

Figure 1 shows a schematic of a communications network 11 of a Network Operator (NO). Preferably, the communications network 11 is a mobile communications network and the Network Operator is a Mobile Network Operator (MNO). This network 11 can be any network supporting 2G, 3G or beyond 3G wireless communications technologies. Non-limiting examples of such networks are: DECT, GSM, GPRS, UMTS, WLAN, Wimax, Wifi, etc.

A user or subscriber 12 is subscribed to the network 11 of that Network Operator (NO). The user 12 is thus subscribed to several services provided by the Network Operator (NO), such as services of payment, access to TV channels, retrieval of songs, prices scheme of a user, a user's contact list, a subscription to an on-line resource, such as a newspaper portal, etc. The user 12 accesses the network 11 through a terminal. The network is preferably a mobile network. Thus, the user 12 is preferably a mobile user who accesses the mobile network trough a mobile terminal.

The present invention provides a method of transferring or sharing one of those services to which the user 12 is subscribed to another user who is not subscribed to that service or who, in spite of being subscribed to it, cannot access that service for any reason. In order to perform such transfer of a service, a server 13 is used.

The user 12 subscribed to the service to be transferred or shared informs the server 13 about the service to be transferred or shared. Non-limiting examples of ways of informing the server 13 about the specific service are: making a call to a service phone number which is answered by an IVR ("Interactive Voice Response"), through a specific application located at the terminal of the user 12, through a short message (SMS) sent to a short number associated to the service and by sending a message to an IP address associated to the server 13.

In a particular implementation, this server 13 is located in the network 11. In other words, the server 13 belongs to the Network Operator (NO) or to the Mobile Network Operator (MNO) if the network is a cellular one. In an alternative embodiment, the server 13 belongs to a partner or third party, which is a service provider with which the NO or MNO has a collaboration agreement, by which the partner or third party provides the users of the NO or MNO certain services. This server 13 is external to the NO or MNO. The terms of this collaboration agreement are out of the scope of the present invention.

Associated to the user or subscriber 12, there is a user account 14. This user account 14 is a register which keeps the values associated to the services, such as resources, rights or capabilities that permit the mobile user 12 to access the services to which the user is subscribed. For example, the user account 14 keeps track of the money or resource (time, chargeable units...) used spent by the mobile user 12 when he uses a service or services to which he is subscribed. This applies to both pre-paid and post-paid services. In a particular implementation, the user account 14 is located in the network 11. In other words, the user account 14 belongs to the NO or MNO. In an alternative embodiment, the user account 14 belongs to the already described partner or third party.

The server 13 communicates with the user account 14 or with the user account server which keeps the accounts of the user 12. In the particular situation in which the network 11 is a mobile or cellular network, this user account server is preferably the HLR (Home Location Register), both for pre-paid and post-paid subscribers. It is to be noted that, although there are data bases, such as SDP, which keep pre-paid clients' data, it is the HLR which provides the information for identifying a specific service used by a user. Every time a user tries to access a service, the network 11 checks whether the user is subscribed or allowed to use that service or not. The HLR provides this information. Therefore, since the server 13 communicates with the user account server (e.g. HLR), the server 13 is informed about the services to which a user 12 is subscribed.

Alternatively, the user account server can communicate and access services-related information of other databases (like information kept by the Customer Services department) and offer that information to a third-party, which manages the server 13.

Figure 1 also shows a second user 15 of a communications network. Preferably, the second user 15 is a mobile user of a mobile communications network. In a particular embodiment, the user 15 is subscribed to the same network 11. That is to say, the user 15 is subscribed to the same NO or MNO as the user 12. In an alternative embodiment, the user 15 is subscribed to another network, not illustrated in figure 1. In this alternative embodiment, the user 15 is subscribed to a different NO or MNO from the one to which the user 12 is subscribed.

The service provided by the server 13 to which the user 12 is subscribed is a service for delegating resources or services from a subscribed user 12 to a non-subscribed user 15 or to user 15 who, in spite of being subscribed to a service, is temporarily unable to access to the service or resource (because he does not have money on his account, coverage, battery, etc.). It can be called a notary service. This service manages the capacity of a user 15 to access to network services, or a sub-group of services, originally owned by another user 12. This service also manages the amount of access allowed to that user 15.

In a particular embodiment, the second user 15 is not subscribed to that service (such as downloading music or a prices scheme of a user) to which the user 12 is subscribed. However, it might happen that, at a certain moment, this user 15 needs or wants to use that service or, more specifically, to use a resource available at that service.

Alternatively, the second user 15 might be subscribed to that service but might be interested in accessing to that service by using the identity of another user. Alternatively, that second user 15, being a mobile user, has access to the service but is temporally out of coverage.

A certain service to which the user 12 is subscribed is to be understood as comprising several resources. Thus, it might happen that the subscribed user 12 transfers not the whole service, but only a part of it (several resources of the whole service). It is also possible that the subscribed user 12 uses the shared service while the user 15 with whom he is sharing it also uses it. For example, if the service is a service for downloading songs, the user 15 can retrieve or download a song (a resource) available while the subscribed user 12 also downloads that song (as long as the user account 14 has enough money or chargeable units to pay for it).

In order for the second user 15 to take advantage of that service or resource of the service (e.g. a song) using the subscription of the user 12 to that service, the user 12 sends the server 13 an identity code of the second user 15. Preferably, both users 12 15 are mobile users. In that case, that identity code of the second mobile user 15 is preferably its Mobile Subscriber Integrated Services Digital Network (ISDN) Number (MSISDN).

As already mentioned before, an identity code or identification of the service that the first user 12 is going to transfer to or share with the second user 15 is also sent to the server 13.

Furthermore, the second user 15 is charged for the use of that service and therefore for the use of the resources available at that service. This charge is done to the account or sub-account created from the user account 14. Therefore, those resources have a value, which can be fixed (for example, the price or cost of downloading a song or a film) or which can be variable (for example, dependent on the size of a file, on the duration of a song, etc.). Thus, the user 12 preferably sends the server 13 information about the quantifiable value of the service, resource or resources that the first user 12 allows to transfer to the second one 15. In other words, the user 12 sends the server 13 information about the resources available at the user account 14 and about the amount of that resource which can be consumed or used by the other user 15. Non-limiting examples of this quantifiable value of resources are: a certain amount of money chargeable to the user account 14, a certain amount of points kept by the first mobile user 12 in its account 14 and a certain amount of time (period of time, such as minutes or seconds), during which the second user 15 is allowed to user the service borrowed from the first user 12 or a certain amount of generic, intermediate units which can be converted into money, time or points.

Optionally, the subscribed user 12 also sends the server 13 its signature. This way, a legal agreement is added to the service.

If the server 13 belongs to the network 11 of the Network Operator, the first user 12 sends the server 13 this request through any means provided by the operator, such as SMS, MMS, USSD, SIP messages based on IMS services, etc. If, on the other hand, the server 13 belongs to a partner or third-party, the first user 12 sends the server 13 this request through an Internet access.

As a consequence of this request, the server 13 creates an account for the second user 15. In this account, the identity code of the second user 15 and an identity code of the service which is shared or transferred are stored. Preferably, also the value (money, time, units) associated to the service is stored.

In a particular embodiment, this account of the second user 15 is a sub-account of the user account 14.

Finally, the server 13 optionally sends to the second user 15 a confirmation of the creation of that account or sub-account. This is done by using the network resources of the network 11. Non-limiting examples of such network resources are SMS messages, MMS messages, USSD, application-level messages, etc.

In figure 1, the step of identifying a second user 15 and requesting the server 13 to create an account is represented by number 1, while the optional step of sending the second user 15 a confirmation of the creation of its account or sub-account is represented by number 2.

Afterwards, the server 13 sends the second user 15 an identifier, preferably a temporal identifier, for accessing to that resource (for example a service for downloading music, tones, the prices scheme of a user, etc.). This is represented by number 2 in figure 1. This way, the second user 15 is allowed to access the service, to which the first user 12 is subscribed. Preferably, the second user 15 can be also transferred from the server 13 an address for the second user 15 to be logged into the server which provides the transferred service. A non-limiting example of such an address is an IP address or a MSISDN number. This communication between the server 13 and the second user 15 is done, for example, if the network is a cellular network and the user 15 is a mobile user, using a short message service (SMS). Alternative possibilities are: MMS, e-mail, Instant Messaging, a web portal, etc.

The second user 15 is now capable of having access to the service of the NO or MNO which is transferred by the first one 12. This is represented by number 3 in figure 1. Thus, the second user 15 can, after sending its identifier, use the service until the quantifiable value associated to the service as registered in the account is finished. This second user 15 can access to the borrowed service by using the Internet access provided by its own NO or MNO. Alternatively, it can access to it by any other network interface available at the corresponding server, provided that network interface is reachable from any of the networks to which the user 15 has access. As a matter of example, if the user 15 has access to a WiFi network, that user 15 can access to that server through said WiFi network, instead of using the network of the NO or MNO to which he is subscribed. Alternatively, the user 15 may have a Bluetooth interface, through which he can access to the server. Optionally, the first user 12 can be notified of the access to the service by the second user 15.

Since the first user 12 has informed the server 13, which in turn has stored it in an account or sub-account, about the quantifiable value (for example, amount of money) borrowed by or assigned to the second one 15, this one cannot exceed that specific value or amount.

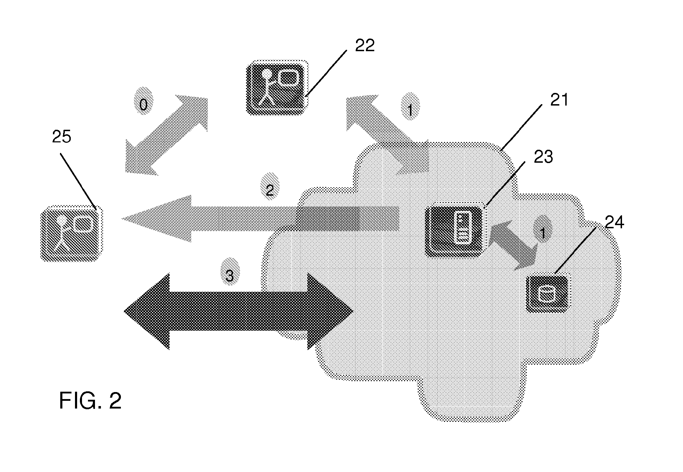

Prior to sending to the server 13 by the subscribed mobile user 12 an identifier of the second user 15 to which the service is transferred, a negotiation between both users can optionally take place. This is illustrated in figure 2 (step 0), wherein the first and second users are respectively referred to as 22 25, the server is referred to as 23, the network as 21 and the user account as 24.

During this negotiation, which is not the scope of the present invention, a certain service or resource owned by (or available for) the first user 12 22 and a certain quantifiable value (chargeable amount of money, time, points...) of said service or resource is negotiated and agreed by both users.

Furthermore, once the first user 12 22 has transferred a service to a second user 15 25, the first user 12 22 can keep on using that service, as far as the user account 14 24 has enough money, time or units for it. In other words, the services of the user 12 22 are not affected by the transfer to the second user 15 25.

Among others, the present invention has the following advantages: if a NO or MNO does not provide a certain service, a user of that NO or MNO can temporally access the network of a different NO or MNO; if a NO or MNO provides an exclusive service, a user of another NO or MNO can temporally use that exclusive service; if a user a NO or MNO cannot use its terminal because it is out of coverage, or because the battery is empty, or because it has not enough money in its account, that user can borrow a service from another user (either from the same NO or MNO or from another one); if a user of a NO or MNO prefers to use the services of a different NO or MNO at particular hours of the day because of better prices (e.g. to make voice calls to users of that different NO or MNO); if a user is involved in a portability process (changing from one NO or MNO to another one) and wants to use a service of the new NO or MNO immediately (before the portability process is finished). It also allows a retailer to offer mobile services to their customers without investing in infrastructure (without deploying its own equipment) and significantly reducing entrance barriers. In this case, it is only required to have a user account of the MNO. This is equivalent to reducing the granularity of a MVNO (Mobile Virtual Network Operator) to user level.

Advantageously, users subscribed to a service can capitalize the resources they have, reselling or negotiating the access to that service.

Furthermore, a collateral service derived from the invention can be implemented: to have Internet servers which store users' contacts, users' accounts, etc., with the purpose of providing access (acting as interface) to the server 13 23 of other network operators.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiments described herein, but also encompasses any variations that may be considered by any person skilled in the art (for example, as regards the choice of components, configuration, etc.), within the general scope of the invention as defined in the appended claims.

## Claims

1. A method for facilitating transfer of services between users of at least one network, the method being **characterised by** the steps of:
receiving from a first user (12, 22) of a network operated by a network operator, said first user (12, 22) having a user account (14, 24) and being subscribed to at least one service provided by said network operator, an identity code of a second user (15, 25) and data identifying a transferable service to which said first user (12, 22) is subscribed; and
assigning to said second user (15, 25) an identifier for accessing to said service, whereby said second user (15, 25) is allowed to access said service to which said first user (12, 22) is subscribed.

2. The method according to claim 1, further comprising the steps of:
creating an account for said second user (15, 25); and
storing in said account the following information: said identity code of the second user (15, 25) and an identity code of said service.

3. The method according to claim 1, wherein said step of receiving an identity code and data identifying a transferable service further comprises the step of receiving a value associated with said service, said value representing a quantifiable unit of said service that said second user (15, 25) is allowed to access.

4. The method according to claim 3, further comprising the steps of:
creating an account for said second user (15, 25); and
storing in said account the following information: said identity code of the second user (15, 25), said data identifying said service and said value associated to said service.

5. The method according to any preceding claim, further comprising the step of:
sending said identifier for accessing to said service to said second user (15, 25).

6. The method according to any preceding claim, wherein said second user (15, 25) is subscribed to a different network operator from the network operator to which said first user (12, 22) is subscribed.

7. The method according to any preceding claim, further comprising the step of assigning by said server (13, 23) to said second user (15, 25) an address to which said second user 15 can be logged in for accessing said service.

8. A server (13, 23) for facilitating transfer of services between users of at least one network (11, 21), to which network at least a first user (12, 22) is subscribed, a user account (14, 24) being associated with said first user (12, 22), the server being **characterised in that** it further comprises:
means for receiving, from said first user (12, 22), an identity code of a second user (15, 25) and data identifying a transferable service to which said first user (12, 22) is subscribed; and
means for assigning, to said second user (15, 25), an identifier for accessing said service, whereby said second user (15, 25) is allowed to access said service to which said first user (12, 22) is subscribed.

9. The server according to claim 8, further comprising means for sending said identifier for accessing said service to said second user (15, 25).

10. The server according to either claim 8 or 9, further comprising means for transferring said service to said second user (15, 25) from said first user (12, 22) which is subscribed to said service.

11. The server according to any one of claims 8 to 10, wherein said server (13, 23) is located in the network (11, 21) of the network operator to which said first user (12, 22) is subscribed.

12. The server according to any one of claims 8 to 10, wherein said server (13, 23) is provided by a third party, different from the network operator to which said first user (12, 22) is subscribed.

13. The server according to either claim 11 or 12, wherein said step of communicating between said first user (12, 22) and said server (13, 23), is done through an Internet access.

14. The server according to either claim 11 or 12, wherein said step of communicating between said first user (12, 22) and said server (13, 23), is done through a mobile telephone connection.
